Europäisches Patentamt

European Patent Office

Office européen des brevets

(19)

(11) Veröffentlichungsnummer : **0 012 191**
**B1**

(12) **EUROPÄISCHE PATENTSCHRIFT**

(45) Veröffentlichungstag der Patentschrift :
24.11.82

(21) Anmeldenummer : 79104135.3

(22) Anmeldetag : 25.10.79

(51) Int. Cl.³ : **C 08 J  3/20**, B 29 D  7/00,
B 29 D  9/00

(54) **Fälschungssichere Folie und ihre Verwendung sowie Verfahren zum fälschungssicheren Kennzeichnen von Gegenständen.**

(30) Priorität : 04.11.78 DE 7832840 U

(43) Veröffentlichungstag der Anmeldung :
25.06.80 (Patentblatt 80/13)

(45) Bekanntmachung des Hinweises auf die Patenterteilung : 24.11.82 Patentblatt 82/47

(84) Benannte Vertragsstaaten :
BE DE FR GB IT LU NL

(56) Entgegenhaltungen :
DE A 2 646 902
DE A 2 733 250
DE U 7 025 989
US A 4 048 150

(73) Patentinhaber : HOECHST AKTIENGESELLSCHAFT
Postfach 80 03 20
D-6230 Frankfurt/Main 80 (DE)

(72) Erfinder : Schäfer, Helmut
Waldweg 39
D-6090 Rüsselsheim (DE)
Erfinder : Unger, Manfred, Dr.
Krauskopfallee 40
D-6229 Schlangenbad (DE)

Jouve, 18, rue St-Denis, 75001 Paris, France

Fälschungssichere Folie und ihre Verwendung sowie Verfahren zum fälschungssicheren Kennzeichen von Gegenständen

Die Erfindung betrifft eine fälschungssichere Folie sowie Verfahren zur fälschungssicheren Kennzeichnung von Gegenständen, wie Produkten oder Verpackungen, mit Hilfe der Folie.

Bekannte, qualitativ hochwertige Markenartikel, wie z.B. Schallplatten, Musikkasetten, Pharmazeutika oder Parfümerieartikel werden in zunehmendem Maße ohne Zustimmung des Originalherstellers nachgeahmt. Damit die Fälschungen nicht ohne weiteres als solche erkannt werden können, werden sie in Verpackungen in den Handel gebracht, die den Originalverpackungen in Größe und Aussehen weitgehend gleichen. Auf diese Weise wird beim Kunden der Eindruck erweckt, es handele sich um das Originalprodukt. Da die gefälschten Artikel zu vergleichsweise niedrigen Preisen angeboten werden und gewöhnlich von minderer Qualität sind, entsteht den Originalherstellern großer materieller Schaden und Verlust an Ansehen.

Aus den genannten Gründen werden seit einiger Zeit Überlegungen angestellt, wie man auf einfache Weise die Originalwaren oder deren Verpackungen fälschungssicher kennzeichnen könnte.

Es ist somit Aufgabe der Erfindung, eine zur fälschungssicheren Kennzeichnung von Produkten oder Verpackungen geeignete Folie vorzuschlagen, die einerseits nur schwierig nachgeahmt und andererseits auf einfache und schnelle Weise identifiziert werden kann.

Die der Erfindung zugrundeliegende Aufgabe wird gelöst durch eine Folie zur fälschungssicheren Kennzeichnung von Gegenständen, die aus einem Laminat aus zwei miteinander verbundenen, transparenten, streckorientierten Folien aus Polyester besteht, die jeweils Farbstoff unterschiedlicher chemischer Struktur enthalten, wobei der Farbstoff in der einen Laminatlage Anthraceno [2,1-m ; 1,9 a-n ; 9a, 9-a] thioxanthen und der in der anderen Laminatlage N-(n-octadecyl)-benzo [k, l] thioxanthen-3,4-dicarboximid ist, sowie das in Anspruch 2 angegebene Verfahren. Die auf den Anspruch 2 rückbezogenen Unteransprüche 3 und 4 konkretisierten vorteilhafte Ausführungsformen des Verfahrens nach Anspruch 2.

Unter einer transparenten Folie ist vorzugsweise eine Folie zu verstehen, deren Transparenz bei Licht einer Wellenlänge von 750 nm mindestens 50 % beträgt. Die Transparenz soll definiert sein als Verhältnis der Lichtintensitäten der Wellenlänge, gemessen mit und ohne Probe mit einer optischen Meßanordnung nach DIN 53 490. Eine solche Folie ist als Vorlaufband an einem bandförmigen Informationsträger aus der US-PS 4,048,150 bekannt.

Die Folie wird durch Extrusion des angefärbten Polyesterrohstoffs hergestellt. Die meisten organischen Farbstoffe sind für diese Anwendung ungeeignet und zersetzen sich bei den hohen Extrusionstemperaturen, die oberhalb 260 °C liegen, so daß eine trübe Folie mit hoher Lichtabsorption resultiert. Übliche anorganische Füllstoffe, wie Titandioxid, Calciumcarbonat oder Glaskugeln, sind zwar ausreichend thermostabil, ergeben aber ebenfalls opake Folien und sind deshalb ungeeignet.

Eine Folie mit erfindungsgemäßen Merkmalen hat somit den Vorteil, daß die Zahl der verwendbaren ausreichend thermostabilen Farbstoffe und damit die Möglichkeiten für die Farbtönung beschränkt sind. Die Transparenz und die eigentümliche Farbtönung lassen sich mit bloßem Auge feststellen, ohne daß eine aufwendige Analyse der Folie oder des Farbstoffs erforderlich ist.

Andererseits kann ein nachträgliches Bedrucken eines Kunststoffilmes mit dem Farbstoff zur Nachahmung des Originalkennzeichnungsbandes auf einfache Weise durch eine Kratzprobe als Fälschung erkannt werden.

Ein weiteres typisches Unterscheidungsmerkmal der Folie gegenüber anderen Materialien ist ihre Dichte von größer als 1. Beim Einbringen in Wasser versinkt die Folie.

Auch die Reißfestigkeit der durch Strecken orientierten Polyesterfolie läßt sich auf einfache Weise von Hand prüfen. Die Reißfestigkeit ist bekanntlich abhängig von den Streckbedingungen und ist vorzugsweise etwa 270 bis 330 N/mm², insbesondere 280-300 N/mm². Die Dicke der Folie liegt im üblichen Bereich und kann je nach Verwendung etwa 10 bis 40 Mikron betragen.

Außerdem läßt sich Polyester auf einfache Weise durch den beim Verbrennen auftretenden typischen Geruch identifizieren.

Das Verbinden geschieht z.B. durch Siegeln oder Schweißen, vorzugsweise jedoch durch Kleben. Das Siegeln erfolgt durch entsprechende Anwendung von Resorcin, gelöst in Äthylacetat, oder von Benzylalkohol als Siegelhilfsmittel. Bei Temperaturen von 150 bis 175 °C werden die zu verbindenden Folien unter einem Druck von etwa 2 N/cm² kurzzeitig aufeinandergepreßt. Das Schweißen kann nach dem Wärmeimpuls- oder Ultraschallverfahren erfolgen. Die besonders vorteilhafte Verklebung ist mit speziellen Klebstoffen, die bei der Kaschierung von Polyesterfolien mit Polyesterfolien bekannt sind, durchzuführen. Diese handelsüblichen Klebstoffe sind meist lösungsmittelhaltige Ein- oder Zweikomponentenklebstoffe auf Polyurethan- oder Polyesterbasis.

Der Klebstoffantrag auf der Folie erfolgt beispielsweise durch ein Walzensystem. In einem Trockenteil werden die Lösungsmittel entfernt, anschließend werden die zu verbindenden Flächen aufeinandergepreßt und gegebenenfalls thermisch aktiviert.

An der Verbindungsfläche tritt keine nachteilige Veränderung der Folienoberflächen auf.

In der Aufsicht gegen einen dunklen, insbesondere schwarzen Hintergrund, können die bei-

den Farbtöne erkannt werden, in der Durchsicht, d.h. gegen einen hellen, insbesondere weißen Hintergrund, erscheint die orangefarbene Mischfarbe. Diese Farbwirkungen können überraschenderweise durch oberflächliches Bedrucken nicht oder nur ungenügend erreicht werden.

Zum Kennzeichnen der Originalgüter mit der Folie der Erfindung wird diese zum Beispiel als Verpackungsfolie oder als Aufreißband verwendet. Es ist auch möglich, die Folie direkt auf das Produkt aufzubringen, z.B. durch Umwickeln, Bekleben oder Verschweißen des Produktes mit einem Folienband.

Die Herstellung der Folie ist in den folgenden Beispielen 1 bis 3 erläutert. Das Polyester Rohmaterial ist Polyäthylenterephthalat mit einer Intrinsic-Viskosität $i_V$ von 0,6 bis 0,8.

Beispiel 1

161 kg Polyesterchips werden mit 21,8 kg eines Masterbatches von Polyester mit 0,8 Gew.-% Anthraceno [2,1-m ; 1,9 a-n ; 9 a, 9-a] thioxanthen nach der Trocknung beider Granulate einem Extruder zugeführt und auf bekannte Art aus einer Breitschlitzdüse ausgepreßt. Der abgeschreckte 300 Mikron starke Vorfilm wird dann einer biaxialen Streckung und daran anschließenden Wärmefixierung unterworfen. Die Transparenz der roten, 30 Mikron dicken Folie beträgt 88 % bei Licht einer Wellenlänge von 750 nm.

Beispiel 2

Auf 198,8 kg getrocknete und noch heiße Polyesterchips werden 1,2 kg, entsprechend 0,6 Gew.-%, von dem Farbstoff N-(n-octadecyl)-benzo [k, l] thioxanthen-3,4-dicarboximid aufgetrommelt und die Folie wie in Beispiel 1 beschrieben hergestellt. Die Transparenz der gelben, 30 Mikron dicken Folie beträgt 87 % bei 750 nm.

Beispiel 3

Analog den Beispielen 1 und 2 hergestellte rote und gelbe Folien einer Dicke von jeweils etwa 19 Mikron werden mit Hilfe eines handelsüblichen lösungsmittelhaltigen Zweikomponenten-Klebstoffs auf Polyurethanbasis bei Raumtemperatur mit einer Walze laminiert. Der erhaltene Verbund zeigt die oben beschriebenen charakteristischen Farbtönungen bei Durchsicht und Aufsicht und ist deshalb zur fälschungssicheren Kennzeichnung von Produkten besonders geeignet.

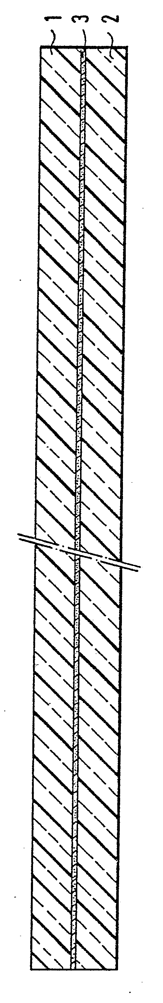

Ein Ausführungsbeispiel der Folie ist in der Figur dargestellt. Mit den Ziffern 1 und 2 sind die beiden Polyesterfilme, mit 3 die Klebstoffschicht bezeichnet.

Die in Beispiel 3 erhaltene Folie ist wegen ihrer hohen Transparenz vorzugsweise zur Herstellung eines fälschungssicheren Vorlaufbandes geeignet. Die Transparenz des Vorlaufbandes gewährleistet, daß ein laufender bandförmiger Informationsträger, wie z.B. ein Magnetband, auf fotoelektrischem Weg abgeschaltet werden kann : Sobald beim Abspulen des Magnetbandes dessen Ende erreicht ist, passiert das Vorlaufband eine Fotozelle, die infolge der ausreichenden Lichtdurchlässigkeit des Vorlaufbandes durch das hindurchtretende Licht ein optisches Signal erhält. Dadurch wird die Abschaltung des laufenden Bandes ausgelöst. Für die Verwendung als Vorlaufband wird vorzugsweise ein Laminat mit einer Gesamtdicke von etwa 28 bis 30 Mikron hergestellt.

Außer den bereits genannten Vorteilen zeigt die Folie bei entsprechender Anwendung von Resorcin oder Benzylalkohol gute Heißsiegelbarkeit und läßt sich gut mit Ultraschall schweißen. Bei der Verwendung von Klebstreifen tritt durch das Klebemittel keine nachteilige Veränderung der Folienoberfläche auf.

## Ansprüche

1. Folie zur fälschungssicheren Kennzeichnung von Gegenständen, die aus einem Laminat aus zwei miteinander verbundenen, transparenten, streckorientierten Folien aus Polyester besteht, die jeweils Farbstoff unterschiedlicher chemischer Struktur enthalten, wobei der Farbstoff in der einen Laminatlage Anthraceno [2,1-m ; 1,9 a-n ; 9 a, 9-a] thioxanthen und der in der anderen Laminatlage N-(n-octadecyl)-benzo [k, l] thioxanthen-3,4-dicarboximid ist.

2. Verfahren zur Kennzeichnung von Gegenständen, bei dem man den zu kennzeichnenden Gegenstand mit einer Folie nach Anspruch 1 versieht.

3. Verfahren nach Anspruch 2, dadurch gekennzeichnet, daß man den zu kennzeichnenden Gegenstand mit Folie nach Anspruch 1 umhüllt.

4. Verfahren nach Anspruch 2, dadurch gekennzeichnet, daß man an den zu kennzeichnenden Gegenstand einen Streifen aus Folie nach Anspruch 1 anbringt.

## Claims

1. A film which is secure against forgeries, for making articles, comprised of a laminate of two transparent stretch-oriented polyester films which are joined to one another and contain dyestuffs of different chemical structures, the dyestuff in one of the two laminate layers being anthraceno [2,1-m ; 1,9 a-n ; 9 a, 9-a] thioxanthene and the dyestuff in the second laminate layer being N-(n-octadecyl)-benzo [k, l] thioxanthene-3,4-dicarboximide.

2. A process for marking articles, wherein the article to be marked is provided with a film according to claim 1.

3. A process according to claim 2, wherein the article to be marked is wrapped in the film according to claim 1.

4. A process according to claim 2, wherein a strip of the film according to claim 1 is attached to the article to be marked.

**Revendications**

1. Feuille stratifiée pour le marquage infalsifiable d'objets, constituée de deux feuilles de polyester transparentes, assemblées, orientées par étirage et contenant chacune un produit colorant d'une composition chimique différente de l'autre, à l'effet de quoi l'une des deux couches contient de l'anthracéno [2,1-m ; 1,9 a-n ; 9 a, 9-a] thioxanthène, alors que l'autre couche contient du N-(n-octadécyl)-benzo [k, l] thioxanthène-3,4-dicarboximide.

2. Procédé pour le marquage d'objets, dans lequel on applique sur l'objet à marquer, une feuille selon la revendication 1.

3. Procédé selon la revendication 2, caractérisé en ce que l'on enrobe l'objet à marquer d'une feuille selon la revendication 1.

4. Procédé selon la revendication 2, caractérisé en ce que l'on applique sur l'objet à marquer une bande d'une feuille selon la revendication 1.